# EUROPEAN PATENT APPLICATION

(11) **EP 1 166 622 A1**
(43) Date of publication of application: **02.01.2002**
(21) Application number: 99959432.8
(22) Date of filing: 28.12.1999
(51) Int. Cl.: A01G 9/10

(54) **ARRAY FOR LONG-TERM STORAGE OF SEEDS PRE-PLANTED IN BLOCKS**

(71) Applicant: Caparros Tartalo, Mercedes, 08302 Mataro (ES)
(72) Inventor: Caparros Tartalo, Mercedes, 08302 Mataro (ES)
(74) Representative: Manresa Val, Manuel
(86) International application number: ES9900407
(87) International publication number: WO0147346

(57) **Abstract**

The invention concerns an array for long-term storage of seeds pre-planted in blocks, which can be transplanted manually, automatically or semi-automatically, wherein the seed (6) preferably has already germinated in said block. The array is defined by a porous body (1) capable of retaining water and of being traversed by the future roots. Said body (1) forms a cavity having at least one substrate and at least one seed. The substrate (2, 3, 4, 5, 7),the seed (6) and the body (1) have been previously dried thereby reducing the humidity thereof to 25 % or less. The blocks are disposed in the compartments (12) of a tray (10) enabling watering during a first plant germination phase. Said tray (10) is provided with means for temporarily retaining the blocks (15) and is sealingly closed by an envelope or a sheet (16). The content of the tray is preserved under predetermined hygrometric conditions preventing spontaneous germination of the stored seeds while preserving intact their ability to germinate over an extended period.

## Description

### Field of the invention

The object of this invention relates to an array for long-term storage of seeds of every class and species, such as horticultural, forest, medicinal, grass, etc. pre-sown in blocks, and more concretely in an array for long-term storage of seeds pre-sown in blocks which cannot be hand or automatically planted.

It is well-known that any seed stored within a natural environment loses sooner or later its capacity to germinate and/or produce a strong nursery. The quickness with which this possibility is lost is directly related to the rate of air humidity and the length of the storage period of time. There exists species of seeds which if not kept in humidity-proof chambers or airtight containers with previously drying the seed and any element accompanying it can lose the germinatability in a few months, while if the said seeds are stored under the conditions proposed by the invention, they shall keep their germinatability untouched during even several years.

### Background of the invention

For producing seedlings it was used to arrange very large trays which were filled with a substrate found in the trade; thereafter the seeds were deposited at even distances and then they were covered with a more or less thin layer of same substrate. Then they were thoroughly watered so that the water was slowly and evenly distributed.

After the plant was born and when it had a radicular system developed, the seedling was pulled up having good care not to break and/or damage as little roots as possible and it was transplanted to the definitive place, either in a pot or in the furrow of the cultivation field.

This traditional system has a very delicate handling and therefore expensive and in addition sometimes a significant rate of seedlings is lost.

There exists companies engaged in obtaining only seedlings, which improved the said system and which are different from it in that the plants are produced in plastic trays having differently sized alveoli according to the requirements of each species. The said alveoli are filled with a substrate for laying one seed in each alveolus and covering it with same substrate. So that, the radicular system remains trapped between the walls of the alveolus itself and forms a tight knot or framing suitable for depositing the seedling at the proposed place. But when transplanting, often part of the substrate falls leaving some of the roots bare so that they may be damaged and so when planting that bare roots in the soil they have to newly become rooted delaying the growth of the plant or tree species involved.

In the practice, this work is carried out by skilled agricultural companies to which the farmers purchase the seedlings they require. So then, in general the farmers do not produce themselves the seedlings of certain species for lack of technical means required different for each species and because in addition they usually have no equipment required available (as it cannot be paid off) for mechanizing and automating production and save a lot of workforce with it; therefore, the farmers must have recourse to the said skilled companies although all of it means an increase of production costs.

In addition to the above stated, EP 0288384 is known which deals with a pre-nursery designed to cultivate flowers, green plants or vegetables which is composed of a cultivating means having an hygrometric low rate in which at least one seed is mechanically introduced the said cultivating means being composed of constituents suitable for that seed germination such as for example peat, vermiculite, nutritive, fungicide etc. additives. The whole constitutes a clod for which an external conditioning has been foreseen the nature or size of which are not specified, but it is deduced it is significant because it shape must allow an easy stacking and palletizing for transportation.

In addition, in such pre-nurseries no long-term storage nor any irrigation system are foreseen until the seedling is born and it is rooted in the land involved.

On the other hand, Model ES-A-1019913 refers to a spongy flat-block-shaped unit for the vegetal production which is constituted from forming or carrying out a chemical process with synthetic resins which gives rise to a body having any shape, for example a parallelepiped, and which is characterized in that the block has a series of holes open at its top part and blind at its lower part, provided in order that substrates and a seed or a cutting are incorporated. The block itself is capable to allow its cutting and shaping into different smaller blocks bearing substrates and seeds, although in the example of the embodiment illustrated and according to the disclosed, its cutting is carried out in a moment when the seedling is already rooted and the block resulting from cutting is ready for its planting in the earth.

Above block is nor foreseen for its storage and transportation as it lacks means such as a cover which obturates the opening of mentioned holes and thus its use at industrial scale is very limited. From the explanations of the said model it results that referred seedling cutting and preparing has to be carried out by the farmer.

No irrigation system is provided either in the said block which because of it will result expensive and in addition as the said cuts have to be made to configure them into different smaller blocks there is the strong likelihood that some roots are cut with resulting damages which, many times, means the lost of the future plant.

### Description of the invention

The object of this invention therefore is to provide the farmers with a unit or array for long-term storage of pre-sown seeds within blocks comprising trays ready for housing a plurality of blocks technically prepared and pre-sown, the unit being fully or partly surrounded by a wrapping or sheet which seals the tray and secures predetermined hygrometric conditions (in general no more than 25% humidity for most the species) providing dry conditions which enhance a correct germination of the seed in a natural environment, bearing in mind that its germinatability is very quickly lost if the said seed is not kept dry and in a dried environment. Once that wrapping or sheet has been open the said blocks will be watered, kept in the said trays, the liquid having access through the lower part of each block by means of a simple method of filling the bottom of the said trays with water. The blocks will absorb the water by osmosis and a controlled humidity will be achieved.

To prevent that during the trays handling and transportation some block can be emptied, it has been provided that each of the blocks incorporates a very thin laminar means covering its opening with for example a very thin paper which may be broken by the seedling when it germinates and emerges. The tray unit in addition incorporates a detachable cover or grid which assists to keep the blocks temporarily attached to the tray recesses or alveoli.

The seed is deposited in the said block which has porous walls which can be easily crossed by the roots; this way they will sustain no trauma when they are transplanted because in fact the whole block is transplanted without cuts which could endanger the integrity of the roots and which, once within the pot or the furrow of the cultivation earth will have a tail of roots which are rooted within the cultivation earth surrounding it.

With this array thus, the farmer is provided with a cheap way of producing nurseries with minimum workforce costs and with a great technical level obtaining nurseries having a very low rate of failures and with maximum vigour, presented in suitable trays and which will be adapted when the seed germinates and the seedling is rooted for transplanting them even with automatic or half-automatic machines with little hand intervention. On the other hand and bearing in mind the long-term storage condition of the seeds of the array proposed to the farmer may in turn store them during a certain period of time before using them regardless of his usual suppliers seasonal shortage.

### Short description of the drawings

In order to facilitate following detailed explanation, a sheet of drawing is attached for illustrative but not limitative example, in which:

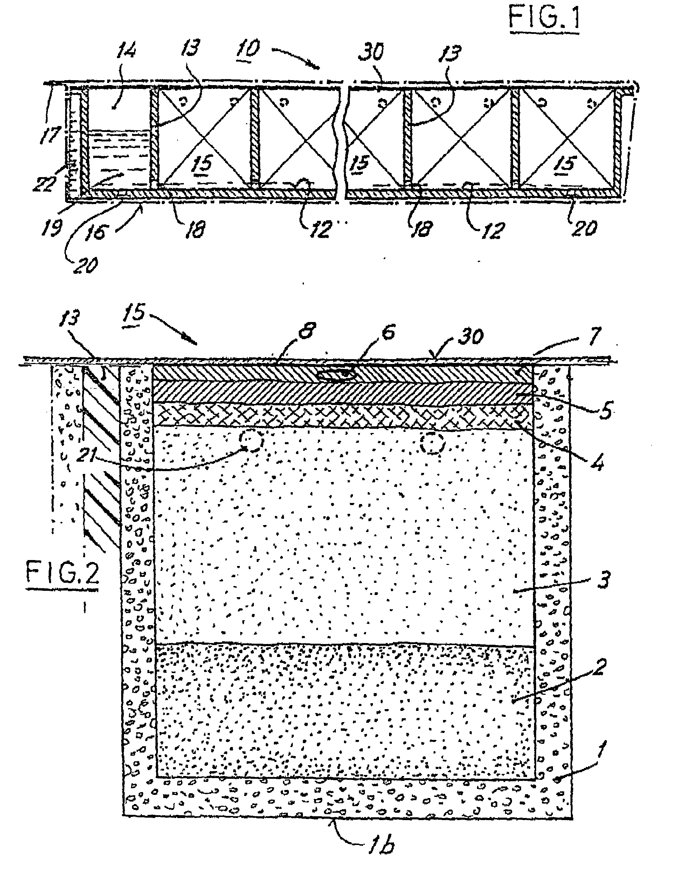

Fig. 1 illustrates a lengthwise section of the tray constituting this array of pre-sown seeds.

And Fig. 2 represents an enlarged detail and also likewise sectioned of one of the blocks installed in a related recess or compartment of the said tray.

### Description in details of an example of embodiment

According to the said figures, it can be noted that the array for long-term storage of pre-sown seeds object of this invention is constituted by a sort of tray 10 obtained for example through plastic material moulding which is subdivided in a plurality of compartments 12 by means of lengthwise and transversal walls 13 and which in addition shows a larger compartment 14 which for example expends along the whole of one side and having same or higher height than the remaining compartments, constituting an irrigation canal.

The said compartments 12 housing the blocks 15 in which related seed/s will develop will preferably although not necessarily have a cubic shape and will contain blocks 15 formed by a respective body 1 having same shape and open at the top, constituted by walls of porous material adapted for retaining and storing water and which may be finally crossed by the future roots (not shown) and which according to a preferred embodiment illustrated in the drawing is filled with several substrates, that is to say:
- a compound 2 for the final food for the roots based on a mixture of one or several elements such as slime, common fine sand, expanded clayey fine sand, peat in a proportion suitable for each class of plant.
- a mixture 3 for the development immediately after the seed germinating, organic humus produced by California worms, expanded clayey fine sand, perlite fine sand, peat and mould.
- an organic fertiliser 4 such as humus from California worms,
- a thin layer 5 for the seat of at least one seed 6 with lyophilised amino acids, composed of dry screened peat, and
- a thin layer 7 for covering the seed 6, such as a base of expanded clayey fine sand and peat with powder of California worm humus.

In general, one or several of these substrates or elements will be available according to the technique necessary for each species in particular.

In order to secure a suitable retention of the said substrates and seed within the block 15 during transportation and handling, it has been provided that the top opening of the body 1 remains closed by a thin sheet 8, which will have a very thin constitution and to be easily crossed by the future emerging germ, for example a little consistent paper which can be torn and crossed by the seedling stem or the apical part in its initial germination step but having capacity to retain the substrate.

In order that the trays 10 so prepared can be stored and used during several months after this long-term storage and in order that seeds do not lose the germinatability it is required that the environment surrounding them is really low in humidity for example about 20% therefore all the elements: body 1, seed 6, substrates 2, 3, 4, 5, 7 of compounds or mixtures and paper sheet 8 (the aim of which has been explained) will be dried and handled in chambers having a 25% maximum humidity rate and for preventing that once they have been sent outside they may be humidified, the whole of the unit 10 of mentioned blocks 15 will be insulated introducing it in, for example, a humidity proof plastic bag 16 or a simple laminar cover which obturates the whole of the tray face including the compartments, advantageously closed, for example, by heat welding 17.

Once in the hands of the consignee and after opening the unit 10, the blocks 15 of each tray 10 have to be conveniently watered in order that their related seeds 6 start to germinate, which will be done, in the illustrated example, through above mentioned irrigation canal 14 which will communicate with each block 15 through holes 18 pierced at about the lower part of the walls 13 and which establish intercommunications between those compartments. And in order that related (lightweight) blocks 15 in an initial irrigation step do not float when receiving the water 19 through their lower part and go away from their respective compartment 12, a detachable cover or grid 30 has been provided, for example locked by coupling the shape of peripheral parts of the cover, on the tray, the said cover or grid 30 will thus temporarily obturate the open top face of the compartments 12 and will retain each body 1 with its block 15.

Once the blocks are moistened, they will rest because of their own weigh on the bottom of the compartments 12 and the said cover or grid 30 may be withdrawn. With such an irrigation system, the liquid will go up to the area occupied by the seed, up to the top part (changing its position according to the class or species), and without excessively swamping the substrate.

Obviously the said cover or grid 30 also fulfils the function of retaining the unit of blocks 15 within the compartments 12 of the tray or unit 10.

At the bottom of the said tray 10 there is provided at least one outlet with a plug 20, located at the bottom of that canal 14 and/or some other point of the bottom of the tray 10 itself for proceeding to empty it when it is required.

In general for plants germination a first step of swamping the whole of the tray can be provided or of an irrigation during a predetermined period of time , variable according to the class of seed/species of plant it is dealt with , followed by steps of emptying in order that the humidity conditions are those suitable. Anyway the tray will serve as common receptacle for all the blocks 15, until the moment of their extraction for inserting them in the earth or transplanting them.

Optionally, the irrigation canal 14 will account with a suitable level instrument 22 for checking the level of water 19 existing within it.

On the other hand, in the walls 1c of the body 1 other holes 21 are provided, pierced at the top part of the said side walls of the body 1 and close to the area or layer occupied by the seed 6 for procuring a convenient ventilation to the environment of the seed 6 itself.

When he thinks it fit, the farmer, gardener or user will proceed to withdraw, without dangerous cuts, one or more blocks 15 of the compartments 12 of the tray 10 for hand, automatic or half-automatic planting them in the land involved, a withdrawal which will result quite easy and will not mean any risk for the integrity of the seedling nor its roots which in due time will have no difficulty for crossing the base 1b or side walls 1c of related body 1 and become definitively rooted in the earth or cultivation means of the field or pot involved (not shown).

The basic characteristics of this array for long-term storage of pre-sown seeds having been widely disclosed, it is stated that same may be constructed with more convenient means and methods as all of it is comprised in the spirit of appended claims.

## Claims

1. Array for long-term storage of seeds pre-sown in blocks which can be hand, automatically or half-automatically transplanted with the seed (6) preferably already germinated within the block, which is delimited by a body (1) of a porous material, capable to retain and store water and to be easily crossed by the future roots, the said body (1) configures a recess open at least at a top face, bearing at least one substrate and at least one seed, **CHARACTERIZED in that** it comprises:
- the said substrate (2, 3, 4, 5, 7) and seed (6) which are at least one, as well as the body (1) all of them previously dried to reduce its humidity to values of about 25% or under;
- a tray (10) with a series of compartments (12) provided for storing the said blocks (15) and for making its controlled irrigation possible in a first step of plants germination;
- means for temporarily retaining the said blocks (15), in the said compartments (12); and
- a wrapping or sheet 16 which surrounds, at least in part the said tray, sealing its compartments (12) occupied by the blocks (15), the said wrapping (16) maintaining thus the contents of the tray (10) in predetermined hygrometric conditions and, in general, in a dry state preventing the spontaneous germination of the seeds during the storage, keeping intact their germinatability during a long period of time.

2. Array, according to the invention 1, **characterized in that** the said compartments (12) are delimited by walls (13) which have at their lower part holes (18) which establish an intercommunication between the different compartments (12) of the tray (10) and with a larger compartment (14) which constitute an irrigation canal.

3. Array, according to claim 1, **characterized in that** each of the bodies (1) delimiting a block (15) integrates, closing its mouth a laminar means (8) very thin based, for example, on very thin paper which may be broken by the seedling when germinating and emerging, but which assists to retain the substrate or substrates (2, 3, 4, 5, 7) and the seed (6) within the said body (1).

4. Array, according to claim 1, **characterized in that** the temporary retaining means of the said blocks (15) in the said compartments (12) during their storage and one or more irrigation steps, consist in a detachable cover or a grid (30), with peripheral means fastening on the contour or walls (13) of the said tray (10).

5. Array according to any of above claims, **characterized in that** the side walls of the said bodies (1) of the blocks (15) have ventilation holes (21) for the environment of the seed (6) close to the place where it is located.

6. Array according to above claims, **characterized in that** the said tray (10) has at least one outlet with related plug (20) located within the irrigation canal (14) and/or any other point of the bottom of the said tray (10).

7. Array according to one of above claims, **characterized in that** the said wrapping or sheet surrounding the said tray (10) with the blocks (15) is constituted by a humidity proof plastic bag or sheet (16) with a sealing (17), such as heat welded, at its mouth itself or at the body of the tray.

8. Array, according to any of above claims **characterized in that** the block (15) is composed of one or more cultivation means (2, 3, 4, 5, 7) bearing at least one seed (6), formed by different substrates such as those for covering the said seed/s, for the seat of the said seed, for fertilising, for immediately developing the said seed and for feeding the future roots of the said seed (6).
